# EUROPÄISCHE PATENTSCHRIFT

(11) **EP 0 519 208 B1**
(45) Veröffentlichungstag und Bekanntmachung des Hinweises auf die Patenterteilung: **18.01.1995**
(21) Anmeldenummer: 92108063.6
(22) Anmeldetag: 13.05.1992
(51) Int. Cl.: F16H 61/22, F16H 59/10

(54) **Verriegelungseinrichtung für einen Wählhebel eines automatischen Kraftfahrzeuggetriebes**
Locking device for selection lever of automatic gear in automotive vehicle
Dispositif de verrouillage pour levier de commande pour transmission automatique d'un véhicule automobile

(30) Priorität: 20.06.1991 DE 4120379
(43) Veröffentlichungstag der Anmeldung: 23.12.1992
(73) Patentinhaber: Dr.Ing.h.c. F. Porsche Aktiengesellschaft, 70435 Stuttgart (DE)
(72) Erfinder: Jozefiak, Alfred, W-7531 Kieselbronn (DE); Reustle, Albrecht, W-7121 Walheim (DE); Dörr, Konrad, W-7100 Heilbronn (DE)

(56) Entgegenhaltungen:
- EP-A- 0 347 150
- DE-C- 3 419 168
- DE-C- 3 911 570
- US-A- 4 126 055

## Beschreibung

Die Erfindung betrifft eine Verriegelungseinrichtung gemäß dem Oberbegriff des Patentanspruches 1.

Bei derartigen Fahrzeugen ist nach dem Anlassen des Motors der Wählhebel aus einer Neutralstellung (P (Parken) bzw. N) in eine Fahrstellung zu bewegen, um das Fahrzeug anfahren zu können. Zu einem unbeabsichtigten Anfahren des Fahrzeuges kann es kommen, wenn der Wählhebel bei laufendem Motor aus der Neutralstellung versehentlich in eine Fahrstellung bewegt wird. Ebenso kann es zu einer ungewollt heftigen Beschleunigung kommen, wenn der Wählhebel in der Warmlaufphase des Motors bei erhöhter Leerlaufdrehzahl in eine Fahrstellung gebracht wird.
Um solche Nachteile zu vermeiden, ist es aus der DE-C- 3 911 570 bekannt, eine Verriegelungseinrichtung für den Wählhebel eines automatischen Kraftfahrzeuggetriebes vorzusehen, bei der ein am Wählhebel angeordnetes Verriegelungsglied in korrespondierende Vertiefungen einer verstellbaren Klinke formschlüssig bei nicht betätigter Bremse eingreift, so daß der Wählhebel in den Neutralstellungen (P (Parken) bzw. N) verriegelt ist. Das Verstellen der Klinke erfolgt durch ein Betätigungselement, welches in einer Ausführung als Hubmagnet an einen von einer logischen Schaltung gesteuerten Stromkreis angeschlossen ist. Die Schaltung verarbeitet mittels mehrerer Sensoren bzw. Schalter Informationen über z.B. Fahrgeschwindigkeit, Zündschlüsselstellung und Bremspedalbetätigung.

Der Erfindung liegt die Aufgabe zugrunde, eine gattungsgemäße Verriegelungseinrichtung zu schaffen, die auch bei unsachgemäß großen Betätigungskräften am verriegelten Wählhebel ein sicheres Entriegeln ermöglicht.

Die Lösung der Aufgabe gelingt mit den Merkmalen des Patentanspruches 1. Weitere, die Erfindung vorteilhaft ausgestaltende Merkmale sind in den Unteransprüchen genannt.

Die erfindungsgemäße Verriegelungseinrichtung ermöglicht ein sicheres Entriegeln auch bei großen Betätigungskräften am verriegelten Wählhebel, in dem das an dem Wählhebel angeordnete, mit Kontaktflächen versehene Verriegelungsglied in einem Berührpunkt mit steil verlaufenden, die Vertiefungen in der Klinke begrenzenden Flanken zur Anlage kommt. Über diesen Berührpunkt wird die am Wählhebel angreifende Betätigungskraft in die Klinke eingeleitet. An den steilen Flanken zerfällt die eingeleitete Kraft in eine in Richtung des Drehpunktes der Klinke weisende nahezu horizontale Komponente und in eine abwärts gerichtete, als nahezu vertikale Stützkraft wirkende Komponente. Die steilen Flanken bewirken dabei, daß diese Stützkraft eine geringe Größe aufweist, die von der horizontalen Komponente deutlich übertroffen wird. Die Stützkraft kann dadurch nur mit geringen Kräften auf die die Klinke in der verriegelnden Position haltenden Bauteile wirken, die infolgedessen mit geringen Kräften von der Klinke entfernbar sind, wodurch diese den Wählhebel entriegelnd außer Eingriff mit dem Verriegelungsglied kommt.

In vorteilhafter Ausgestaltung gewährleisten konvex gekrümmte Kontaktflächen gemeinsam mit geradlinig verlaufenden Flanken einen einzigen, in seiner Lage genau bestimmbaren Berührpunkt.
Die steilflankige Auslegung bewirkt, daß die horizontale Komponente relativ groß ausfällt und mit einem geringen Abstand an der Drehachse der Klinke vorbei weist. Infolgedessen fällt die Größe der Stützkraft gering aus.

Die die Klinke in der verriegelnden Position haltenden Bauteile sind als Rollen ausgebildet, wobei eine Rolle als ortsfest in dem Gehäuse gelagertes Stützglied wirkt und eine zweite, als Sperrglied wirkende Rolle mittels eines Betätigungselementes von einer ersten in eine zweite Stellung bewegt wird. In der zweiten Stellung wird die jeweilige Vertiefung der Klinke von dem z.B. als Hubmagnet ausgebildeten Betätigungselement durch das Sperrglied in den Wählhebel sperrenden Eingriff mit dem Verriegelungsglied gebracht. In dieser Stellung wird die Stützkraft unter Zwischenschaltung des Sperrgliedes auf dem Stützglied abgestützt. Aufgrund der geringen Größe dieser Stützkraft kann das Sperrglied mit kleinen Kräften in die zweite Stellung verschoben werden. Dieses wird unterstützt durch die Ausbildung von Verriegelungs- und Stützglied als reibungsarme Rollen.

Die Erfindung wird beispielhaft anhand von Figuren erläutert.

Es zeigen:

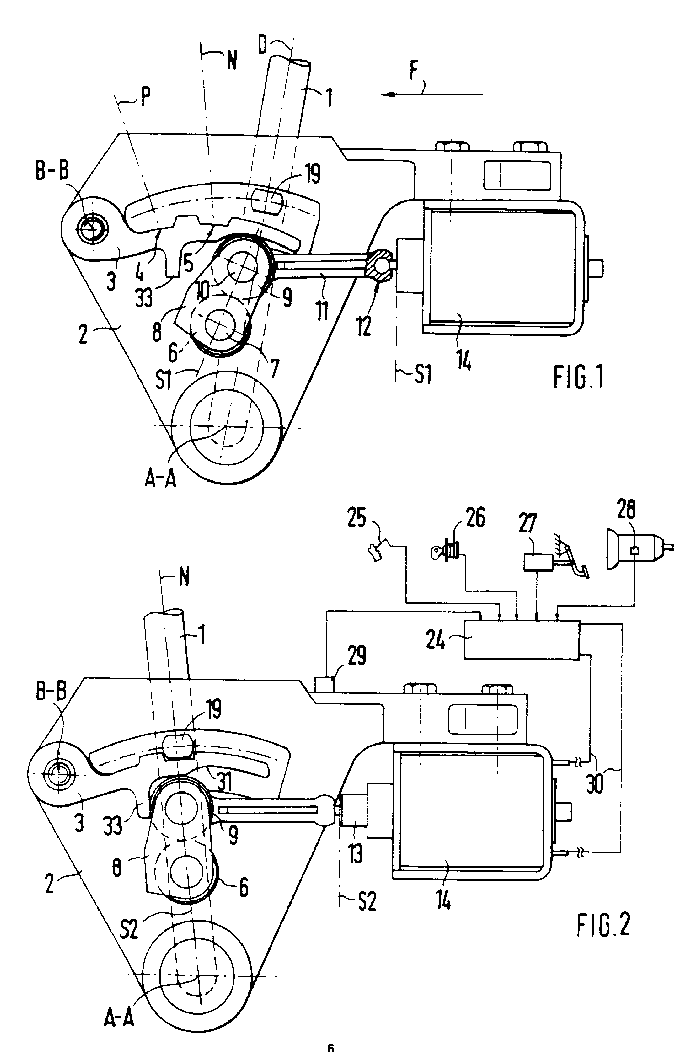

- Fig. 1: schematisch eine erste Ausführung einer Verriegelungseinrichtung mit einem Wählhebel in einer Fahrstellung,
- Fig. 2: schematisch eine Verriegelungseinrichtung gemäß der ersten Ausführung mit einem verriegelten Wählhebel in einer Neutralstellung,
- Fig. 3: vergrößert einen Ausschnitt von Fig. 2,
- Fig. 4: schematisch und perspektivisch eine zweite Ausführung der Erfindung und
- Fig. 5: schematisch eine Ansicht in Richtung des Pfeiles X gemäß Fig. 4.

Ein Wählhebel 1 für ein automatisches Getriebe ist in einem Gehäuse 2 um eine Achse A-A schwenkbar gehalten. Der Wählhebel 1 kann in Neutralstellungen P bzw. N sowie in mindestens eine Fahrstufe D verschwenkt werden. Die Fahrtrichtung ist durch einen Pfeil F dargestellt. An dem Gehäuse 2 ist eine um eine Drehachse B-B drehbare Klinke 3 angeordnet, die im wesentlichen bogenförmig ausgebildet ist und auf ihrer Oberseite den Neutralstellungen P bzw. N zugeordnete Vertiefungen 4 bzw. 5 aufweist. Desweiteren ist an dem Gehäuse 2 ein als Rolle 6 ausgebildetes Stützglied angeordnet, welches reibungsarm auf einer Achse 7 gelagert ist. Mittels eines auf der Achse 7 gelagerten Hebels 8 wird ein als Rolle 9 ausgebildetes Sperrglied in ständigem Kontakt mit der Rolle 6 gehalten.

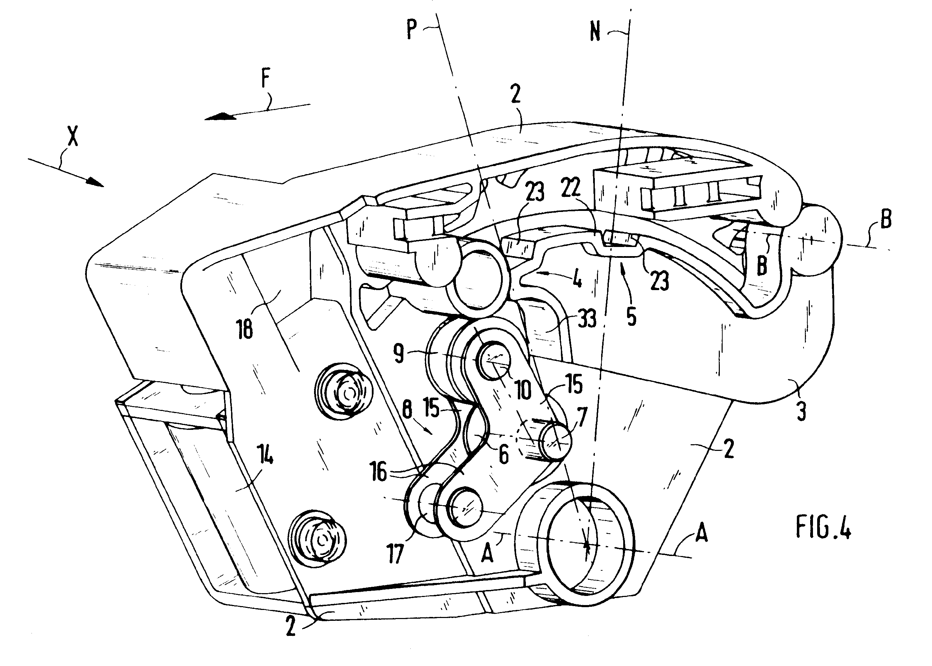

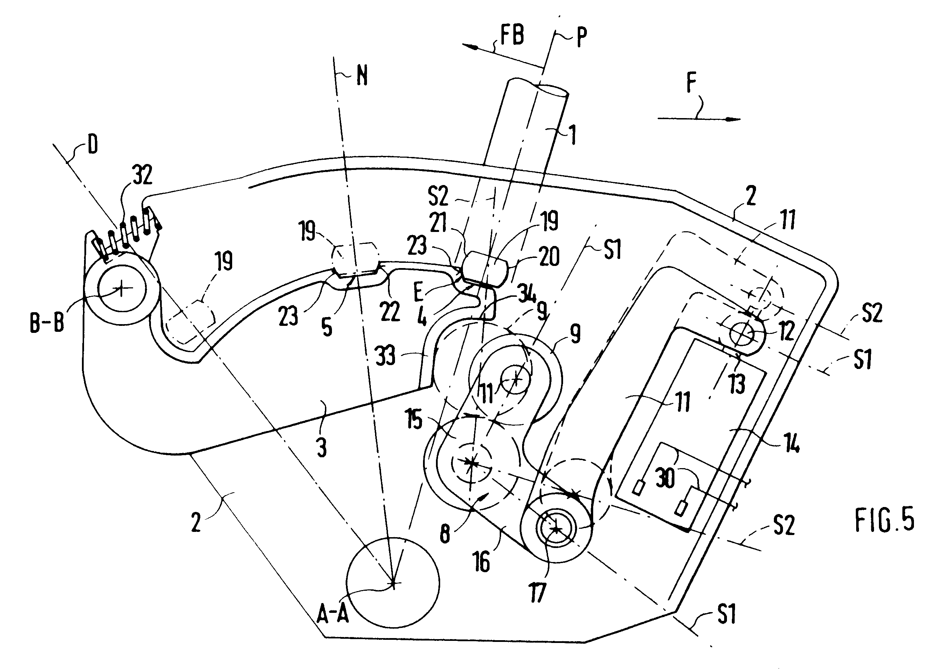

In einer ersten Ausführung ist auf einer die Rolle 9 lagernden Achse 10 zusätzlich ein Pleuel 11 drehbar gelagert. Dieses ist endseitig über ein Kugelgelenk 12 mit einem Stempel 13 eines als Hubmagnet 14 ausgebildeten, am Gehäuse 2 gehaltenen Betätigungselementes verbunden.
Gemäß einer zweiten Ausführung besteht der Hebel 8 aus zwei jeweils nahezu einen rechten Winkel aufweisenden Winkelhebeln 15, zwischen denen die Rollen 6 bzw. 9 angeordnet sind. Zwischen abgewinkelten Armen 16 ist eine starre Achse 17 angeordnet, an der das für diese Ausführung nur in Fig. 5 gezeigte Pleuel 11 drehbar gelagert ist. Das Pleuel 11 ist hierbei zweifach gekröpft und durchdringt eine Öffnung 18 des Gehäuses 2, um das Kugelgelenk 12 mit der Achse 17 zu verbinden. In Fig. 4 sind zur Verdeutlichung das Pleuel 11 sowie der Wählhebel 1 nicht dargestellt.
In beiden Ausführungen ist an dem Wählhebel 1 ein den Vertiefungen 4, 5 zugeordnetes Verriegelungsglied 19 befestigt, welches konvex gekrümmt verlaufende Kontaktflächen 20, 21 aufweist. Die Vertiefungen 4 bzw. 5 weisen als Begrenzungen steil verlaufende, geradlinige Flanken 22, 23 auf.

Der Hubmagnet 14 wird von einer Logikschaltung 24 gesteuert, welche Informationen von einem ein drehzahl- und ein fahrgeschwindigkeitsabhängiges Signal abgebenden Sensor 25, von einem die Stellung des Zündschlüssels erfassenden Sensor 26, von einem die Bremspedalbetätigung erfassenden Schalter 27, von einem den im Getriebe des Kraftfahrzeuges eingelegten Gang erfassenden Sensor 28 und von einem die Stellung des Wählhebels erkennenden Sensor 29 verwertet. Die Logikschaltung 24 ist mittels elektrischer Leitungen 30 mit dem Hubmagnet 14 verbunden.

Im Fahrbetrieb des Kraftfahrzeuges befindet sich der Wählhebel 1 unverriegelt in Fahrstellung D und die Rolle 9 wird in einer ersten Stellung S1 von dem durch die Logikschaltung 24 nicht bestromten Hubmagneten 14 gehalten. Die Klinke 3 liegt in einer abgesenkten Stellung mit einer Rampe 31 auf der Rolle 9 auf, kann aber auch, wie nur in der zweiten Ausführung gezeigt, durch eine sich am Gehäuse 2 abstützende Druckfeder 32 Rasselgeräusche vermeident in Anlage mit dem Verriegelungsglied 19 gehalten werden.

Wird das Fahrzeug angehalten und der Wählhebel 1 in eine Neutralstellung verschwenkt und das Bremspedal nicht betätigt, so befördert der bestromte Hubmagnet 14 mittels Stempel 13 und Pleuel 11 die Rolle 9 in eine zweite, den Wählhebel 1 verriegelnde Stellung S2. Dabei drückt in der ersten Ausführung die Rolle 9 über die Rampe 31 die Klinke 3 in eine angehobene Stellung, in der das Verriegelungsglied 19 in Eingriff mit der Vertiefung 5 steht. Die Stellung S2 ist dabei durch einen an der Klinke 3 angeformten Anschlag 33 definiert. In der zweiten Ausführung verharrt die Klinke 3 wie zuvor beschrieben in der angehobenen Stellung.

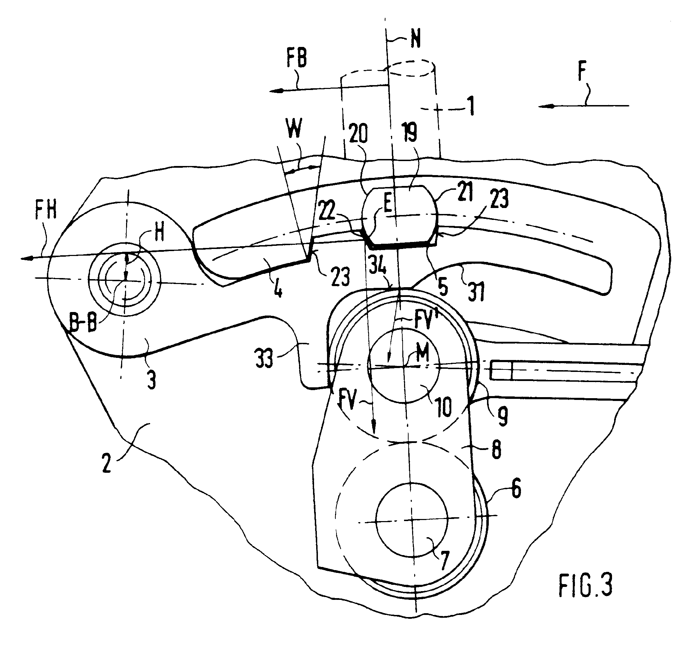

Bei einem anschließenden Versuch, eine Fahrstufe einzulegen, kann durch unsachgemäßes Bedienen des Wählhebels 1 eine große Betätigungskraft FB am Wählhebel 1 wirken. Dazu kann es z.B. kommen, wenn die das Fahrzeug bedienende Person in Unkenntnis der Verriegelungseinrichtung versucht, eine Neutralstellung zu verlassen, ohne zuvor das Bremspedal zu betätigen, wie aus der gattungsbildenden DE 39 11 570 C1 bekannt.
Gemäß Fig. 3 steht infolge der Betätigungskraft FB die gekrümmte Kontaktfläche 20 in genau einem Berührpunkt E in Anlage mit der Flanke 22. Dieser Berührpunkt E ist Ausgangspunkt der über das Verriegelungsglied 19 in die Klinke 3 eingeleiteten Kraft. Aufgrund der unter einem Flankenwinkel W angeordneten, steilen Flanke 22 zerfällt diese Kraft in eine horizontale Komponente FH und eine als Stützkraft wirkende vertikale Komponente FV. Diese Komponente FV stützt sich über die Rolle 9 auf der als Stützglied wirkenden Rolle 6 ab.

Diese Komponente FV wird über eine an der Klinke 3 ausgebildete Anlagefläche 34 in die Rolle 9 eingeleitet, die sich auf der Rolle 6 abstützt. Diese Anlagefläche 34 ist geringfügig in Richtung des Anschlages 33 geneigt angeordnet, so daß die von ihr in die Rolle 9 eingeleitete Kraftkomponente FV` mit einem geringen Abstand an dem Mittelpunkt M der Rolle 9 vorbei weist.

Alle Kräfte in Fig. 3 sind rein qualitativ dargestellt und gelten für beide Ausführungen der Erfindung.

Der Flankenwinkel W bestimmt die Richtung der Komponente FH und ist so gewählt, daß diese Komponente FH mit einem geringen, als kurzer Hebel wirkenden Abstand H um die Drehachse B-B der Klinke 3 wirkt. Eine solche Auslegung gewährleistet, daß die Betätigungskraft FB im wesentlichen in diese Achse B-B eingeleitet wird und infolge dessen die Stützkraft FV gering ausfällt. Dieses hat zur Folge, daß die Rolle 9 mit geringen Kräften aus der Stellung S2 in die Stellung S1 verschoben werden kann.
Eine dementsprechende Auslegung des Hubmagneten 14 gestattet das Entriegeln des Wählhebels 1 durch das Betätigen des Bremspedals auch bei gleichzeitig wirkenden, hohen Betätigungskräften FB.

Die zuvor beschriebenen Kräfteverhältnisse liegen in entsprechender Form vor, wenn in der verriegelten P- oder N-Stellung in die zu der in Fig. 3 gezeigten entgegengesetzten Richtung am Wählhebel 1 gezogen wird. Die Kontaktfläche 21 kommt dann mit den Flanken 23 in einem Berührpunkt E in Anlage.

Das gleiche gilt für die zweite Ausführung gemäß Fig. 5, bei der dann die Kontaktfläche 20 in Anlage mit der Flanke 22 gelangt.

Der Berührpunkt E kann in Abwandlung der zuvor beschriebenen Ausführungen auch zwischen geradlinig verlaufenden Kontaktflächen (20, 21) und konvexen Flächen (22, 23) liegen.

## Patentansprüche

1. Verriegelungseinrichtung für einen Wählhebel (1) eines automatischen Kraftfahrzeuggetriebes,bei der ein am Wählhebel angeordnetes Verriegelungsglied (19) formschlüssig in korrespondierende Vertiefungen (4,5) einer verstellbaren Klinke (3) bei nicht betätigter Bremse eingreift, so daß der Wählhebel in den Neutralstellungen (P bzw. N) verriegelt ist, **dadurch gekennzeichnet**, daß die Klinke (3) steil verlaufende, die Vertiefungen (4, 5) begrenzende Flanken (22, 23) aufweist, an denen das Verriegelungsglied (19) bei verriegeltem Wählhebel (1) und einer an diesem angreifenden Betätigungskraft (FB) mit Kontaktflächen (20, 21) in einem Berührungpunkt (E) eine nahezu horizontale und eine nahezu vertikale Kraftkomponente (FH und FV) bestimmend zur Anlage kommt.

2. Einrichtung nach Anspruch 1, **dadurch gekennzeichnet**, daß die durch die Betätigungskraft (FB) über den Berührpunkt (E) in die Klinke (3) eingeleitete Kraftkomponente (FH) mit einem geringen Abstand (H) von einer Drehachse (B-B) der Klinke (3) angeordnet verläuft.

3. Einrichtung nach Anspruch 2, **dadurch gekennzeichnet**, daß der Berührpunkt (E) zwischen konvex gekrümmt ausgebildeten Kontaktflächen (20, 21) und geradlinig verlaufenden Flanken (22, 23) angeordnet ist.

4. Einrichtung nach Anspruch 1, **dadurch gekennzeichnet**, daß sich bei verriegeltem Wählhebel (1) die Klinke (3) unter Zwischenschaltung eines in eine erste und eine zweite Stellung (S1 und S2) beweglichen Sperrgliedes (Rolle 9) auf einem ortsfest in einem Gehäuse (2) gelagerten Stützglied (Rolle 6) abstützt.

5. Einrichtung nach Anspruch 4, **dadurch gekennzeichnet**, daß das Sperrglied (Rolle 9) von einem Betätigungselement (Hubmagnet 14) von der zweiten (S2) in die erste Stellung (S1) bewegbar angeordnet ist, wobei in der Stellung (S1) das Verriegelungsglied (19) außer Eingriff mit den Flanken (22, 23) steht.

6. Einrichtung nach Anspruch 4, **dadurch gekennzeichnet**, daß die Klinke (3) bogenförmig gestaltet ist und auf einer den Vertiefungen (4, 5) gegenüberliegenden Unterseite einen Anschlag (33) für das Sperrglied (Rolle 9) aufweist.

7. Einrichtung nach Anspruch 4, **dadurch gekennzeichnet**, daß das Sperrglied (Rolle 9) in der den Wählhebel (1) verriegelnden zweiten Stellung (S2) mit dem Anschlag (33) in Anlage steht.

8. Einrichtung nach Anspruch 6, **dadurch gekennzeichnet**, daß die Klinke (3) eine Anlagefläche (34) für die Rolle (9) aufweist, die geringfügig in Richtung des Anschlages (33) geneigt ist.

## Claims

1. A locking device for a selector lever (1) of an automatic transmission of a motor vehicle, in which a locking member (19) mounted on the selector lever engages with positive locking in corresponding depressions (4, 5) in a displaceable catch (3) when the brake is not actuated, so that the selector lever is locked in the neutral positions (P and N), **characterized in that** the catch (3) has flanks (22, 23) which extend steeply and bound the depressions (4, 5) and against which the locking member (19) comes to rest with contact faces (20, 21) at a contact point (**E**) while determining a substantially horizontal force component (**FH**) and a substantially vertical force component (**FV**) when the selector lever (1) is locked and when an actuating force (**FB**) acts thereon.

2. A device according to Claim 1, **characterized in that** the force component (**FH**) induced in the catch (3) by the actuating force (**FB**) by way of the contact point (**E**) occurs at a slight distance (**H**) from a rotational axis (**B-B**) of the catch (3).

3. A device according to Claim 2, **characterized in that** the contact point (**E**) is situated between contact faces (20, 21) curved in a convex manner and flanks (22, 23) extending in a straight line.

4. A device according to Claim 1, **characterized in that** when the selector lever (1) is locked the catch (3) is supported - with the interposition of an arresting member (roller 9) movable into a first position (**S1**) and a second position (**S2**) - on a support member (roller 6) mounted stationary in a housing (2).

5. A device according to Claim 4, **characterized in that** the arresting member (roller 9) is arranged so as to be movable by an actuating member (lifting magnet 14) from the second position (**S2**) into the first position (**S1**), wherein the locking member (19) is disengaged with the flanks (22, 23) in the position (**S1**).

6. A device according to Claim 4, **characterized in that** the catch (3) is made arcuate and on an underside opposite the depressions (4, 5) is provided with a stop (33) for the arresting member (roller 9).

7. A device according to Claim 4, **characterized in that** the arresting member (roller 9) rests against the stop (33) in the second position (**S2**) locking the selector lever (1).

8. A device according to Claim 6, **characterized in that** the catch (3) has an abutment face (34) for the roller (9), which is slightly inclined towards the stop (33).

## Revendications

1. Dispositif de verrouillage d'un levier de sélection (1) d'une boîte de vitesses automatique d'un véhicule automobile, dans lequel un organe de verrouillage (19), placé sur le levier de sélection, s'engage par concordance de forme dans des creux (4, 5) correspondants d'un cliquet (3) réglable, lorsque le frein n'est pas actionné, ce qui fait que le levier de sélection est verrouillé dans les positions de point mort (P ou N), caractérisé en ce que le cliquet (3) présente des flancs (22, 23) abrupts, délimitant les creux (4, 5), sur lesquels l'organe de verrouillage (19) vient s'appliquer avec des surfaces de contact (20, 21), en un point de contact (E), déterminant une composante de force pratiquement horizontale (FH) et une composante de force pratiquement verticale (FV), lorsque le levier de sélection (1) est verrouillé et lorsqu'une force d'actionnement (FB) agit sur celui-ci.

2. Dispositif selon la revendication 1, caractérisé en ce que la composante de force (SH), transmise au cliquet (3), par la force d'actionnement (FB), par l'intermédiaire du point de contact (E), s'étend à une distance (H) réduite d'un axe de rotation (B-B) du cliquet (3).

3. Dispositif selon la revendication 2, caractérisé en ce que le point de contact (E) se situe entre des surfaces de contact (20, 21) convexes et des flancs (22, 23) rectilignes.

4. Dispositif selon la revendication 1, caractérisé en ce que dans le cas où le levier de sélection (1) est verrouillé, le cliquet (3) prend appui, par insertion d'un organe de blocage (rouleau 9), mobile entre une première et une seconde position (S1 et S2), sur un organe d'appui (rouleau 6) monté fixe dans un boîtier (2).

5. Dispositif selon la revendication 4, caractérisé en ce que l'organe de blocage (rouleau 9) est monté déplaçable par un élément d'actionnement (aimant de levage 14) de la seconde (S2) à la première position (S1), dans la position (S1) l'organe de verrouillage (19) n'étant pas en prise avec les flancs (22, 23).

6. Dispositif selon la revendication 4, caractérisé en ce que le cliquet (3) est en forme d'arc et présente, sur une face inférieure, située à l'opposé des creux (4, 5), une butée (33) pour l'organe de blocage (rouleau 9).

7. Dispositif selon la revendication 4, caractérisé en ce que l'organe de blocage (rouleau 9) s'applique contre la butée (33), dans la seconde position (S2) verrouillant le levier de sélection (1).

8. Dispositif selon la revendication 6, caractérisé en ce que le cliquet (3) présente une surface d'application (34) pour le rouleau (9), qui est légèrement inclinée en direction de la butée (33).
